# EUROPÄISCHE PATENTANMELDUNG

(11) **EP 2 295 820 A2**
(43) Veröffentlichungstag der Anmeldung: **16.03.2011**
(21) Anmeldenummer: 10009273.3
(22) Anmeldetag: 07.09.2010
(51) Int. Cl.: F15B 13/02

(54) **Sicherheitseinrichtung für Hydrauliksysteme mit Kupplungselement**

(30) Priorität: 10.09.2009 DE 202009012329 U
(71) Anmelder: Meycotec GmbH, 06507 Gernrode (DE)
(72) Erfinder: Kubasiak, Harald, 06507 Gernrode (DE); Lerche, Eike, 06502 Weddersleben (DE)

(57) **Zusammenfassung**

Sicherheitseinrichtung für Hydrauliksysteme, vorzugsweise für kettengetriebene Baumaschinen und deren Sicherheitseinrichtung am Spannelement des Leitrades, bestehend aus einem Ventilkörper mit Vor-, Überdruck- und Rückschlagventil in einem Gehäuse und einem Kupplungselement für den Anschluss eines Druckmessgerätes, wobei eine Seitenfläche des Ventilkörpers eine Bohrung mit oder ohne Innengewinde zur Aufnahme des Kupplungselementes mit direktem Zugang zur Fettkammer aufweist und das Kupplungselement in den Ventilkörper eingebaut ist.

## Beschreibung

### Erfindungsgebiet

Die Erfindung betrifft eine verbesserte Sicherheitseinrichtung für Hydrauliksysteme mit Kupplungselement und Sicherung der Überdruckventileinstellung, vorzugsweise für kettengetriebene Baumaschinen am Spannelement des Leitrades, zur direkten Druckmessung in einer Fettkammer des Spannelementes.

### Hintergrund der Erfindung

Es ist allgemein bekannt, für die Ermittlung von Druckverhältnissen in einer Fettkammer eines Spannelementes einen separaten Zugang zu schaffen, um ein Druckmessgerät zu montieren. Dazu werden Ventilkupplungen, beispielsweise Minimess-Anschlüsse, verwendet. Ventilkupplungen dieser Art werden beispielsweise in der DE 3218115 C2 und DE 102005012238 B4 beschrieben. Diese bisher praktizierte Verfahrensweise und Messanordnung hat den Nachteil, dass damit ein großer Montageaufwand, der den Zugang zur Fettkammer gewährleisten muss, verbunden ist. So ist bei den meisten Kettenfahrzeugen eine Druckmessung bei Wartungsarbeiten nur mit großem Aufwand möglich, da zur Montage eines Messanschlusses ein druckloser Zustand des Hydrauliksystems hergestellt werden muss. Das ist auf Grund der Bauweise und dem Zugang zu den Spannelementen schwierig und zeitaufwändig. Bei den bekannten Druckmessungen hat sich auch als nachteilig erwiesen, dass die Messergebnisse beim Messen des Druckes durch die vorhandenen Rückschlagventile mit Fehlern behaftet sind.

### Zusammenfassung der Erfindung

Die Erfindung wird im Hauptanspruch definiert und charakterisiert, während die abhängigen Ansprüche weitere Merkmale der Erfindung beschreiben.

Der Erfindung liegt die Aufgabe zugrunde, eine verbesserte Sicherheitseinrichtung mit Kupplungselement für eine direkte Überprüfung des Innendrucks einer Fettkammer im Einsatz von Spannelementen zu entwickeln. Weiter besteht die Aufgabe darin, die Überdruckventileinstellung zusätzlich zu sichern, um ein unsachgemäßes Verstellen am Überdruck- bzw. Entlastungsventil der Sicherheitseinrichtung zu verhindern bzw. nachzuweisen.

Erfindungsgemäß wird die Aufgabe durch eine Kombination bekannter Bauelemente, bestehend aus einer Sicherheitseinrichtung, die in einem Ventilkörper mit Vorspann-, Rückschlag- und Überdruckventil ausgerüstet ist, und einem Kupplungselement zum Anschluss eines Druckmessgerätes so gelöst, dass in den Ventilkörper des Sicherheitsventils ein Kupplungselement integriert wird, mit direktem Zugang über das Sicherheitsventil zur Fettkammer. Das Kupplungselement kann in eine Bohrung mit einem Innengewinde eingeschraubt und / oder fest integriert werden.

Für die erfindungsgemäße Sicherheitseinrichtung können bekannte Sicherheitsventile mit Vor- und Überdruckventilen für Hydrauliksysteme eingesetzt werden.

Als Kupplungselemente können bekannte oder handelsübliche Minimess-Kupplungen, Ventilkupplungen, Messkupplungen oder Schlauch-Kupplungen je nach Einsatz- und Verwendungszweck eingesetzt werden.
Die erfindungsgemäße Sicherheitseinrichtung kann am Spannelement auch drehbar sein, um im Einbauzustand die Position des Kupplungselementes bzw. des Messanschlusses zu optimieren.

Weiter wurde die erfindungsgemäße Sicherheitseinrichtung dahingehend verbessert, dass die Kontermutter am Überdruckventil in ihrer Lage mit einem Positionsstift aus Metall fixiert wird. Damit ist ein Verdrehen nicht mehr möglich. Kommt es dennoch unter Gewaltanwendung zum Verstellen der Kontermutter, dann verbiegt bzw. schert der Positionsstift ab. So ist ein unsachgemäßer Umgang mit der Sicherheitseinrichtung bei den Kunden besser nachweisbar als bisher.

Die erfindungsgemäße Kombination an sich bekannter Bauelemente stellt eine kostengünstige und verbesserte Sicherheitseinrichtung für den Praxiseinsatz dar. Dadurch ist eine einfache Handhabung sowie Kontrolle der Druckverhältnisse in der Fettkammer durch die Ventilkupplung an der Sicherheitseinrichtung gewährleistet. Ein großer Vorteil der erfindungsgemäßen Lösung besteht darin, dass in jeder Arbeits- und Wartungsphase eine direkte Druckmessung ohne Messfehler vorgenommen werden kann. An das Kupplungselement können Manometer oder sonstige handelsübliche Druckmessgeräte angeschlossen werden. Somit ist ein schneller und direkter Zugang zu den Innendruckverhältnissen der Fettkammer des Kettenspanners über die erfindungsgemäße Sicherheitseinrichtung jederzeit ohne zusätzlichen Montage- und Demontageaufwand möglich. Durch die erfindungsgemäße Lösung ergeben sich vielfältige Anwendungsmöglichkeiten.

### Beschreibung der Zeichnungen mit Ausführungsbeispiel

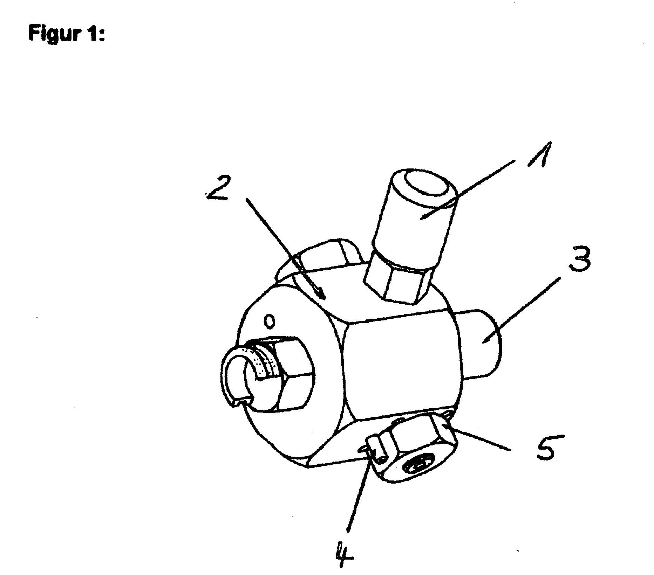

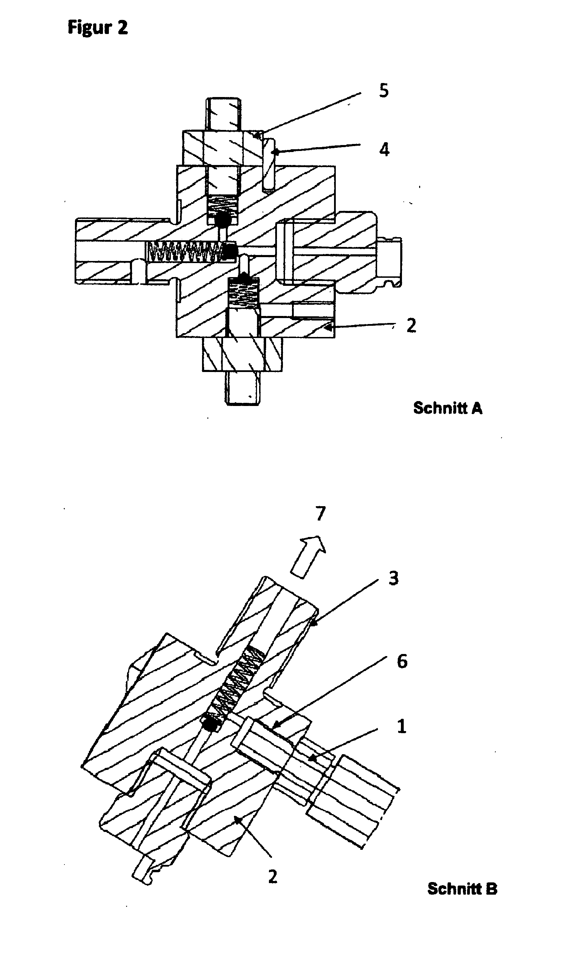

Eine Ausführungsform der Erfindung wird anhand der Zeichnungen, Figur 1 und Figur 2, näher erläutert:
- Figur 1:: Die Ansicht zeigt die erfindungsgemäße Sicherheitseinrichtung mit einer handelsübliche Minimess-Kupplung (1), die in einen Ventilkörper (2) eingeschraubt ist, das Gewinde (3) zum Einschrauben in die Fettkammer des Kettenspanners und den Positionsstift (4) zur Sicherung der Kontermutter (5) am Überdruckventil.
- Figur 2:: Die verbesserte Sicherheitseinrichtung wird als Gesamtansicht in Schnitt A und Schnitt B dargestellt, wobei die Seitenfläche des Ventilkörpers (2) der Sicherheitseinrichtung eine Bohrung (6) mit Innengewinde enthält, in die ein Kupplungselement (1), hier ein Minimess-Anschluss, eingebaut ist. Der Durchmesser des Innengewindes (6) wird durch das Gewinde des einzusetzenden Kupplungselementes (1) je nach Verwendungszweck bestimmt. Das Kupplungselement (1) kann in die Bohrung mit Innengewinde (6) direkt eingeschraubt werden bzw. in dem Ventilkörper fest integriert sein. Das Gewinde (3) wird in das Spannelement für den Zugang zur Fettkammer (7) eingeschraubt. Zur Druckmessung wird in an sich bekannter Weise auf das Kupplungselement (1) ein entsprechendes Druckmessgerät montiert.
In Schnitt B ist der Messanschluss mit Bohrung (6) zur Aufnahme des Kupplungselementes und direktem Zugang zur Fettkammer des Spanners dargestellt.

## Patentansprüche

1. Sicherheitseinrichtung für Hydrauliksysteme, vorzugsweise für kettengetriebene Baumaschinen und deren Sicherheitseinrichtung am Spannelement des Leitrades, bestehend aus einem Ventilkörper mit Vor-, Überdruck- und Rückschlagventil in einem Gehäuse und einem Kupplungselement für den Anschluss eines Druckmessgerätes, **dadurch gekennzeichnet, dass** eine Seitenfläche des Ventilkörpers eine Bohrung mit oder ohne Innengewinde zur Aufnahme des Kupplungselementes mit direktem Zugang zur Fettkammer aufweist und das Kupplungselement in den Ventilkörper eingebaut ist.

2. Sicherheitseinrichtung nach Anspruch 1, **dadurch gekennzeichnet, dass** das Kupplungselement in den Ventilkörper eingeschraubt oder fest integriert ist.

3. Sicherheitseinrichtung nach Anspruch 1 und 2, **dadurch gekennzeichnet, dass** die Kontermutter am Überdruckventil der Sicherheitseinrichtung durch einen Positionsstift fixiert wird.
